# DEMANDE DE BREVET EUROPEEN

(11) **EP 1 061 049 A1**
(43) Date de publication de la demande: **20.12.2000**
(21) Numéro de dépôt: 00112766.1
(22) Date de dépôt: 16.06.2000
(51) Int. Cl.: C02F 3/12, B01D 21/28, B01D 21/24

(54) **Station d'epuration des eaux usees**

(30) Priorité: 18.06.1999 BE 9900429
(71) Demandeur: SAT, 7800 Ath (BE)
(72) Inventeur: Bottemanne, Ernest, 1460 Ittre (BE)
(74) Mandataire: Vanhamme, Joseph Louis

(57) **Abrégé**

L'invention concerne une station d'épuration des eaux usées.

Cette station est du type comprenant un compartiment d'entrée (4) des eaux usées, un compartiment de traitement aérobie (6) des eaux usées en provenance dudit compartiment d'entrée (4) et un compartiment clarificateur. La station est caractérisée en ce qu'elle comporte un compartiment formant réservoir tampon (5) disposé entre le compartiment d'entrée (4) et le compartiment de traitement aérobie (6) et qui est adapté pour réguler le débit des eaux transférées au compartiment de traitement aérobie (6).

L'invention est utilisable pour l'épuration des eaux usées.

## Description

L'invention concerne une station d'épuration des eaux usées du type comprenant un compartiment d'entrée des eaux usées, un compartiment de traitement aérobie des eaux usées en provenance dudit compartiment d'entrée et un compartiment clarificateur.

Les stations d'épuration des eaux usées de ce type, qui sont connues, sont des stations de grande taille dans lesquelles l'alimentation en eaux usées à traiter et collectée par des réseaux d'égout et de collecteurs s'effectue à débit naturellement tamponné grâce à la grande capacité de rétention des systèmes de collecte et à l'autorégulation provoquée par un nombre important de rejets d'effluent répartis sur le réseau.

Or, la législation actuelle rend obligatoire l'épuration des eaux usées par exemple des maisons particulières, des petites agglomérations, des campings de centres d'hébergement, des bureaux et des petites industries et analogues. Pour pouvoir être utilisées dans ces cas, les stations d'épuration doivent être plus petites tout en assurant constamment une qualité d'épuration satisfaisante. Or, de telles stations plus petites ont l'inconvénient que les arrivées d'eaux usées en quantités relativement importante par rapport à la capacité de réception relativement limitée provoquent des chocs hydrauliques considérables pouvant nuire au fonctionnement correct de la station.

Un autre problème rencontré sur ces petites stations concerne l'étape de clarification qui consiste en une séparation entre l'eau épurée et la boue produite, résultat du développement bactérien nécessaire à l'élimination de la pollution présente dans les effluents. En effet, dans les grosses stations, les clarificateurs peuvent être suffisamment grands pour assurer un temps de séjour relativement long. La diminution de la taille des stations, entraînant la réduction de la taille des clarificateurs écourte le temps de séjour dans ces derniers. Il en résulte un pouvoir d'épuration insuffisant.

La présente invention a pour but de proposer une station d'épuration des eaux usées qui pallie les inconvénients qui viennent d'être énoncés.

Pour atteindre ce but, une station d'épuration selon l'invention est caractérisée en ce qu'elle comporte un compartiment formant réservoir tampon disposé entre le compartiment d'entrée et le compartiment de traitement aérobie et qui est adapté pour réguler le débit des eaux transférées au compartiment de traitement aérobie.

Selon une autre caractéristique de l'invention, le compartiment clarificateur comporte un dispositif d'augmentation du temps de séjour des eaux dans ce compartiment.

Selon une caractéristique de l'invention le dispositif d'augmentation du temps de séjour est un dispositif d'allongement du chemin d'écoulement des eaux entre l'entrée et la sortie du compartiment clarificateur.

Selon une caractéristique de l'invention le dispositif d'augmentation du temps de séjour des eaux dans le compartiment clarificateur comporte au moins deux parois perpendiculaires au flux traversant le clarificateur dont l'une est disposée dans le fond et l'autre en surface et provoquant un flux des eaux par au-dessus de la première et par en dessous de la seconde paroi.

Selon encore une autre caractéristique de l'invention, les parois perpendiculaires précitées placées alternativement dans le fond et en surface constituent un moyen de décantation des particules en suspension par la création d'un flux vertical alternatif entre ces parois.

Selon une caractéristique avantageuse de l'invention, le compartiment tampon est équipé d'un dispositif de pompe de transfert des eaux usées présentes dans le compartiment tampon dans le compartiment de traitement aérobie.

Selon une autre caractéristique de l'invention, le dispositif de pompe de transfert des eaux dans le compartiment de traitement aérobie est formé par un élévateur d'eau à air comprimé.

Selon encore une autre caractéristique avantageuse de l'invention, la station d'épuration comporte une cuve à paroi étanche dont l'espace interne est divisé par des cloisons en les compartiments sus-mentionnés.

Selon encore une autre caractéristique de l'invention, la cuve présente une forme sensiblement cylindrique.

Selon encore une autre caractéristique de l'invention, dans cette cuve cylindrique, le compartiment clarificateur s'étend diamétralement entre une partie formant compartiment d'entrée et une partie comportant le compartiment de traitement aérobie et le compartiment tampon.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue schématique d'une station d'épuration selon l'invention ;
- la figure 2 est une vue de dessus d'un mode de réalisation préféré d'une station d'épuration selon l'invention ;
- la figure 3 est une vue en coupe selon la ligne III-III de la figure 2 ; et
- la figure 4 est une vue en coupe selon la ligne IV-IV de la figure 2.

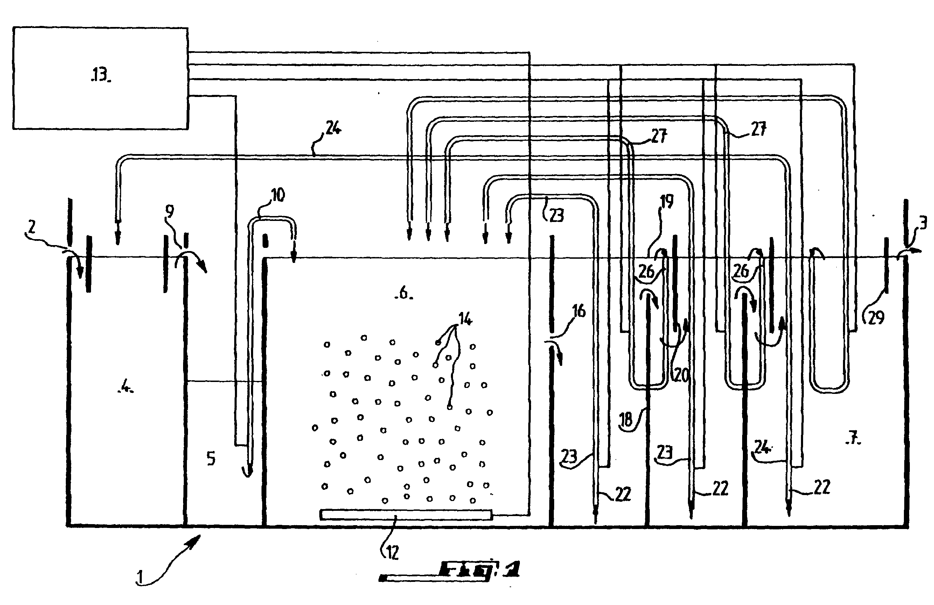

Une station d'épuration des eaux usées selon l'invention, telle que représentée schématiquement sur la figure 1, comprend essentiellement une cuve étanche à l'eau 1 en tout matériau approprié, par exemple en béton ou en matière plastique, qui comporte, entre l'entrée 2 des eaux usées et la sortie 3 des eaux épurées un compartiment d'entrée 4 de réception des eaux usées et adapté pour accomplir la fonction d'un décanteur primaire, un compartiment 5 formant réservoir tampon, un compartiment d'aération 6 des eaux usées, c'est-à-dire de traitement aérobie et un compartiment 7 de clarification des eaux traitées dans le compartiment 6.

Plus précisément, le compartiment d'entrée 4 est adapté pour piéger les matières contenues dans les eaux usées et facilement décantables, et les matières flottantes. A cette fin le compartiment comporte un dispositif syphoide indiqué de façon générale en 9 pour assurer l'écoulement des eaux du compartiment 4 dans le compartiment tampon 5. Dans ce dernier, les eaux sont stockées et extraites par un dispositif de pompage 10. Ce dernier pourrait être formé par un dispositif élévateur d'eau à air comprimé ou par des pompes électromécaniques. Le dispositif de pompage permet de réguler quantitativement l'alimentation en eaux usées du compartiment de traitement aérobie 6, le compartiment étant dimensionné pour permettre la réception subite de quantités d'eaux relativement importantes à l'entrée 2 de la station. Ainsi les chocs hydrauliques que constituent les arrivées de telles quantités d'eaux sont amortis par le compartiment tampon 5. Dans le compartiment tampon, la fonction de régulation pourrait être combinée à une fonction de stockage de boues ou de dénitrification.

Dans le compartiment de traitement aérobie 6, les eaux en provenance du compartiment tampon 5 sont aérées par l'intermédiaire d'un diffuseur 12 de fines bulles 14, qui est situé près du fond du compartiment. A cette fin le diffuseur est alimenté en air comprimé par une source d'air comprimé 13. La présence d'oxygène dans le compartiment due aux fines bulles 14 assure un développement de bactéries dans le compartiment, qui est suffisant pour provoquer l'épuration efficace des eaux usées. Ces dernières, après le traitement dans le compartiment 6 parviennent à travers une connexion 16 dans le compartiment de clarification 7.

Le compartiment clarificateur 7 comporte entre l'entrée formée par la connexion 16 et la sortie 3 un certain nombre de plaques disposées perpendiculairement au sens du flux des eaux traversant le compartiment. L'ensemble des plaques comporte, disposées de façon alternante des plaques 18 qui s'étendent du fond du compartiment jusqu'à un niveau prédéterminé sous le niveau 19 des eaux et des plaques 20 qui s'étendent depuis un certain niveau au-dessus du niveau d'eau 19 jusqu'à un niveau prédéterminé au-dessus du fond. Comme cela est indiqué par des flèches sur la figure 1, les eaux sont ainsi forcées de passer successivement par au-dessus des parois 18 et par en dessous des parois 20. Les passages du flux sont suffisants pour ne créer aucune perturbation ni accélération des eaux entre l'entrée 16 dans le compartiment et la sortie 3 des eaux clarifiées formant la sortie des eaux qui ont été épurées dans la station. Le compartiment clarificateur comportera un nombre approprié de plaques de fond 18 et de plaques de surface 20 pour assurer le temps de séjour dans le compartiment, qui est néssaire pour obtenir l'effet de clarification souhaité.

Pour améliorer l'efficacité de la station, on a prévu dans chacune des zones délimitées par les plaques de fond une reprise des boues décantées grâce à un dispositif de pompage 22 formé avantageusement par un dispositif élévateur d'eau à air comprimé. Les boues ainsi reprises sont transférées vers le compartiment de traitement aérobie 6 ou le compartiment décanteur primaire 4 à travers des conduits respectivement 23 et 24 selon que l'on souhaite obtenir une recirculation ou une purge des boues. La purge des boues pourrait égalament être faite vers un compartiment séparé (non représenté) ayant la seule fonction de stockage des boues.

D'autre part, dans chacune des zones délimitées par les plaques en surface 20 les matières flottantes sont évacuées vers le compartiment de traitement aérobie 6 par l'intermédiaire avantageusement d'un dispositif élévateur d'eau à air comprimé 26 à travers des conduits 27. Les matières flottantes pourraient également être évacuées vers le décanteur primaire 4 ou, le cas échéant, vers un compartiment séparé de stockage des boues (non représenté).

Enfin, en sortie du compartiment clarificateur 7, un système de paroi syphoide 29 retient les matières éventuellement flottantes qui n'ont pas été reprises par les dispositifs susmentionnés 26.

Il est à noter que tous les dispositifs élévateurs d'eau à air comprimé 5, 23 et 26 pourraient être alimentés en air comprimé par la source d'air comprimé 13.

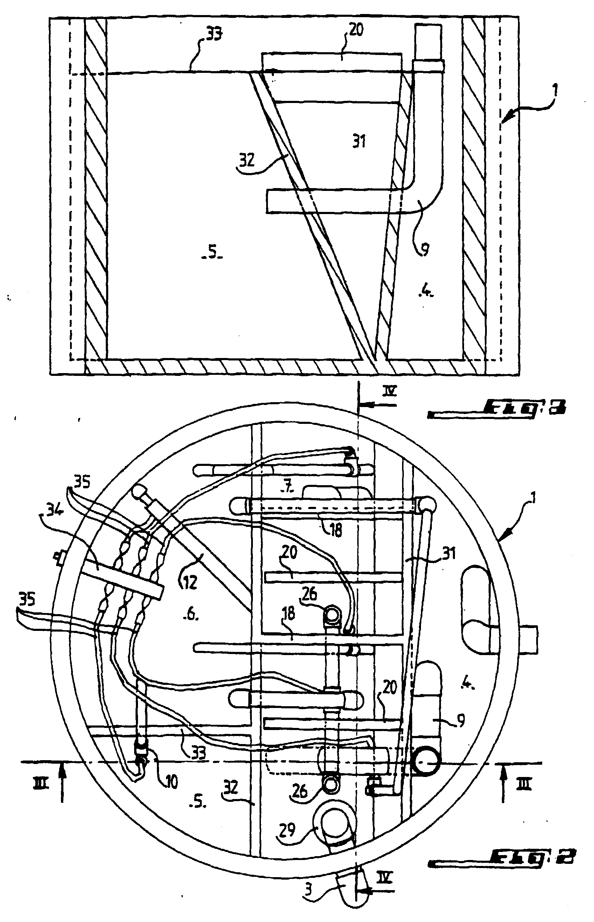

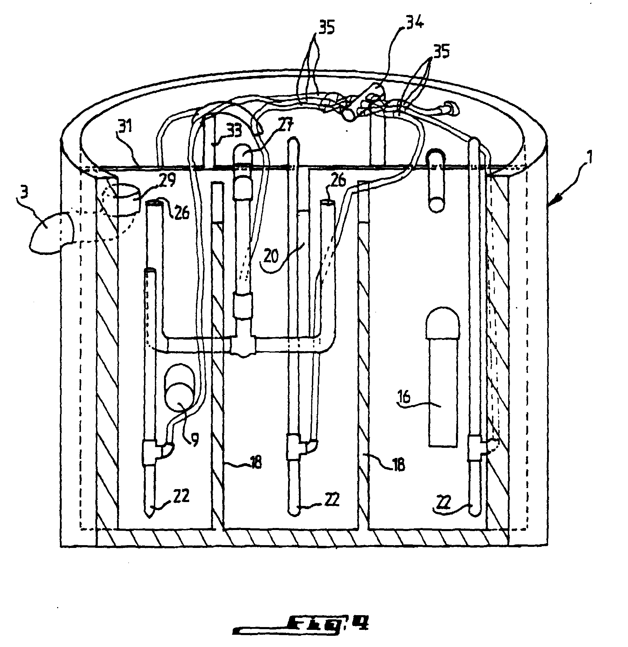

Les figures 2 à 4 montrent un mode de réalisation concret et avantageux d'une station d'épuration des eaux usées selon l'invention, dont le principe vient d'être décrit en se reportant à la figure 1. Comme on le voit sur les figures, la cuve 1 présente une forme cylindrique circulaire dans laquelle le compartiment clarificateur 7 délimité par des cloisons 31 et 32, s'étend sensiblement diamétralement. D'un côté de ce compartiment est disposé le compartiment d'entrée et décanteur primaire 4 tandis que sur l'autre côté la partie entre le compartiment 6 et la paroi de la cuve est divisé par une cloison 33 en deux portions, à savoir une portion plus grande constituant le compartiment de traitement aérobie 6 et une portion plus petite formant le compartiment tampon 5. On constate encore que les parois 31 et 32 de délimitation du compartiment 6 sont inclinées en se rapprochant en direction du fond de la cuve. En 34 est représenté un distributeur de l'air comprimé en provenance de la source 13 non représentée, qui alimente les élévateurs d'eau à air comprimé à travers des conduits indiqués en 35.

Bien entendu de nombreuses modifications peuvent être apportées à la station d'épuration selon l'invention, sans sortir du cadre de l'invention. Ainsi la cuve pourrait avoir toute autre forme appropriée, par exemple ovale ou rectangulaire. La cuve pourrait être réalisée en toute matière appropriée. Les dispositifs de pompage ou certains de ceux-ci peuvent être des pompes électromécaniques de toute autre nature appropriée. Le nombre d'unités de plaques de fond et de surface peut être supérieur ou inférieur au nombre de trois montré sur la figure 1. Les communications entre les différents compartiments peuvent bien entendu être de toute autre nature appropriée.

## Revendications

1. Station d'épuration des eaux usées du type comprenant un compartiment d'entrée des eaux usées, un compartiment de traitement aérobie des eaux usées en provenance dudit compartiment d'entrée et un compartiment clarificateur, caractérisée en ce que le compartiment clarificateur (7) comporte un dispositif d'augmentation du temps de séjour des eaux dans ce compartiment.

2. Station d'épuration selon la revendication 1, caractérisée en ce qu'elle comporte un compartiment formant réservoir tampon (5) disposé entre le compartiment d'entrée (4) et le compartiment de traitement aérobie (6) et qui est adapté pour réguler le débit des eaux transférées au compartiment de traitement aérobie (6).

3. Station d'épuration selon l'une des revendications 1 ou 2, caractérisée en ce que le compartiment tampon est équipé d'un dispositif de pompe (10) de transfert des eaux usées dans le compartiment de traitement aérobie (6).

4. Station d'épuration selon la revendication 3, caractérisée en ce que le dispositif de pompe de transfert (10) des eaux dans le compartiment de traitement aérobie (6) est formé par un élévateur d'eau à air comprimé.

5. Station d'épuration selon l'une des revendications 1 à 4, caractérisée en ce que le compartiment d'entrée (4) constitue un décanteur primaire.

6. Station d'épuration selon l'une des revendications 1 à 5, caractérisée en ce que le dispositif d'augmentation du temps de séjour est un dispositif d'allongement du chemin d'écoulement des eaux entre l'entrée (16) et la sortie (3) du compartiment clarificateur.

7. Station d'épuration selon l'une des revendications 1 à 6, caractérisée en ce que le dispositif d'augmentation du temps de séjour des eaux dans le compartiment clarificateur (7) comporte au moins deux paires de parois (18, 2 0) perpendiculaires au flux traversant le clarificateur dont l'une (18) est disposée de façon alternante dans le fond et l'autre (20) en surface et qui sont configurées pour provoquer un flux de façon alternante, par au-dessus de la paroi de fond et par en dessous de la paroi en surface.

8. Station d'épuration selon la revendication 7, caractérisée en ce que les parois perpendiculaires précitées (18, 20) placées alternativement dans le fond et en surface constitue un moyen de décantation des particules en suspension par la création d'un flux vertical alternatif entre ces parois.

9. Station d'épuration selon l'une des revendications 7 ou 8, caractérisée en ce qu'une zone délimitée entre deux plaques de surface (20) comporte des dispositifs d'évacuation (26) des matières flottantes, de préférence vers le compartiment de traitement aérobie (6).

10. Station d'épuration selon la revendication 9, caractérisée en ce qu'un dispositif d'évacuation des matières flottantes est formé par un dispositif de pompe avantageusement du type élévateur à air comprimé.

11. Station d'épuration selon l'une des revendications 7 à 10, caractérisée en ce qu'une zone délimitée entre deux plaques de fond (18) est pourvue d'un dispositif de transfert (22) de boues vers au moins le compartiment de traitement aérobie (6).

12. Station d'épuration selon la revendication 11, caractérisée en ce que le dispositif de transfert est avantageusement du type élévateur d'eau à air comprimé.

13. Station d'épuration selon l'une des revendications précédentes, caractérisée en ce qu'elle comporte une cuve (1) à paroi étanche dont l'espace interne est divisé par des cloisons (31, 32 et 33) en les compartiments (4, 5, 6, 7) susmentionnés.

14. Station d'épuration selon la revendication 13, caractérisée en ce que la cuve (1) présente une forme avantageusement sensiblement cylindrique.

15. Station d'épuration selon la revendication 13 ou 14, caractérisée en ce que, dans cette cuve, le compartiment clarificateur (7) s'étend diamétralement entre une portion formant le compartiment d'entrée (4) et une partie comportant le compartiment de traitement aérobie (6) et le compartiment (5).
